# EUROPÄISCHE PATENTSCHRIFT

(11) **EP 1 584 156 B1**
(45) Veröffentlichungstag und Bekanntmachung des Hinweises auf die Patenterteilung: **07.06.2006**
(21) Anmeldenummer: 03785587.1
(22) Anmeldetag: 19.12.2003
(51) Int. Cl.: H04L 9/32

(54) **TELEKOMMUNIKATIONSGESTÜTZTER ZEITSTEMPEL**
TELECOMMUNICATION-ASSISTED TIME STAMP
HORODATAGE ASSISTÉ PAR RÉSEAU DE TÉLÉCOMMUNICATION

(30) Priorität: 08.01.2003 DE 10301100
(43) Veröffentlichungstag der Anmeldung: 12.10.2005
(73) Patentinhaber: Deutsche Telekom AG, 53113 Bonn (DE)
(72) Erfinder: TRINKEL, Marian, 52372 Kreuzau OT Untermaubach (DE)
(86) Internationale Anmeldenummer: PCT/DE2003/004190
(87) Internationale Veröffentlichungsnummer: WO 2004/064316

(56) Entgegenhaltungen:
- DE-A- 19 845 199
- US-A1- 2002 169 970

## Beschreibung

Die Erfindung betrifft ein Verfahren zur Bereitstellung eines Zeitstempels durch ein manipulationssicheres Zeitsignal über ein Telekommunikationsnetzwerk sowie ein zugehöriges System zur Erzeugung eines manipulationssicheren Zeitstempels in netzwerkbasierten Kommunikationssystemen und ein Verfahren zur Übermittlung von Daten mit einem manipulationssicheren Zeitstempel über ein Telekommunikationsnetzwerk von einem ersten Netzwerkteilnehmer zu einem zweiten Netzwerkteilnehmer.

Die Problematik eines sicheren elektronischen Zeitstempels tritt überall dort in Anwendungen auf, wo die Zeit der Erstellung von Daten oder Dokumenten und/oder der Zugang solcher elektronischer Daten zeitlich nachgewiesen werden muss. Insbesondere durch die elektronische Verbreitung von Post, beispielsweise in Form von e-mails, voice mails, Faxe etc. wird ein gesicherter Zeitstempel unentbehrlich, zumal bei digitalen Signaturen eine manipulationsgesicherte Zeitangabe erforderlich ist.

Grundsätzlich ist es denkbar ein Zeitsignal, welches zur elektronischen Zeitstempelung von Daten verwendet werden soll, beispielsweise aus einem gesetzlich bzw. amtlich anerkannten Zeitzeichengeber abzuleiten. Ein solches Zeitzeichen wird in Deutschland beispielsweise über den DCF-77-Langwellensender in Braunschweig ausgestrahlt. Zwar ist dieses Zeitzeichen hochgenau, jedoch nicht manipulationssicher, so dass sich die Möglichkeit ergibt - die gesendete Zeit zu manipulieren, wodurch es zu Abweichungen zwischen der tatsächlichen Zeit und der in einem elektronischen Dokument angegebenen Zeit kommen kann. Missbrauchsmöglichkeiten sind dementsprechend überall dort gegeben, wo aus wirtschaftlicher und gesetzlicher Sicht Zeitstempel zu beachten sind.

Aus der DE 198 45 198 ist es bereits bekannt ein Verfahren zur Übermittlung offizieller amtlicher Zeitinformationen bereitzustellen, bei dem eine Zeitinformation in die Netze eines Mobilnetzbetreibers eingespeist wird. Gemäß dem hier bekannten Verfahren wird die Zeitinformation von dem Mobilnetzbetreiber verschlüsselt und sodann zu einem Endgerätebetreiber, der die Entschlüsselung der Zeitinformation im Endgerät vornimmt, über das Mobilnetz übertragen. Hierbei ergibt sich eine sichere Übertragung, jeweils basierend auf der Technologie des Netzbetreibers lediglich für den Zeitraum bei der Übertragung vom Mobilnetzbetreiber zum Endgerätebetreiber. Eine Manipulationssicherheit kann jedoch nicht garantiert werden für die Zeiträume bis zum Zugang der Zeitinformation beim Mobilnetzbetreiber, so dass hier insbesondere durch die offenen Vermittlungsstellen in Kommunikationsnetzwerken Missbrauchsmöglichkeiten gegeben sind.

Aus der DE 13845199 ist ein Verfahren zur Berreitstellung eines Zeitstempels bekannt, wobei ein amtlich anerkanntes, Zeitsignal von einem Mobil-Netzbetreiber empfangen und verschlüsselt wird und über das Mobiltelekommunikationsnetzwerk an Netzwerkteilnehmern übermittelt und entschlüsselt wird.

Aufgabe der Erfindung ist es ein manipulationssicheres telekommunikationsbasiertes-Verfahren und System für die Bereitstellung eines Zeitstempels zu schaffen, welches eine deutlich höhere Sicherheitsstufe im Vergleich zum Stand der Technik aufweist.

Diese Aufgabe wird durch ein Verfahren gemäß Anspruch 1 und ein system gemäß Anspruch 7 gelölst.

Diese Aufgabe wird gemäß der Erfindung dadurch gelöst, dass ein Netzwerkteilnehmer von einem insbesondere zertifizierten Zentralsystem ein Zeitsignal anfordert, wobei es sich bei diesem Zeitsignal bevorzugt um ein amtlich anerkanntes Zeitsignal, wie z.B. das des DCF 77-Senders handelt. Dieses Zeitsignal wird bereits vor der Einspeisung in ein Telekommunikationsnetzwerk von dem bevorzugt zertifizierten Zentralsystem mit wenigstens einem Schlüssel verschlüsselt und erst nach dieser Verschlüsselung in ein Telekommunikationsnetzwerk eingespeist und über dieses an den Netzwerkteilnehmer übermittelt. Dieser ist sodann in der Lage das verschlüsselte Datenpaket mit demselben oder denselben Schlüsseln zu entschlüsseln und so ein manipulationsgesichertes Zeitsignal zu empfangen.

Gegenüber dem bekannten Verfahren im Stand der Technik hat das erfindungsgemäße Verfahren bereits den Vorteil, dass das amtlich anerkannte Zeitsignal bereits vor der Einschleusung in ein Kommunikationsnetzwerk von einem bevorzugt zertifizierten Zentralsystem, welches beispielsweise in einem sogenannten Trust-Center ausgebildet ist, zu verschlüsseln. Dieses Zentralsystem bietet mit seinen erhöhten Sicherheitsanforderungen eine höhere Sicherheitsstufe als das im Stand der Technik beschriebene Verfahren, da hier die für Manipulationen besonders anfälligen Vermittlungsstellen aufgrund der vorverlagerten Verschlüsselung keine Angriffspunkte mehr bilden können.

Die eigentliche Verschlüsselung und Entschlüsselung des Zeitsignales sowohl beim Zentralsystem als auch beim Netzwerkteilnehmer kann über dem einschlägigen Fachmann hinlänglich bekannte Verschlüsselungsalgorithmen vollzogen werden, die wenigstens einen Schlüssel zur Verschlüsselung der Information benötigen. Die Art der Verschlüsselung, beispielsweise durch digitale Signaturen, Hashfunktionen etc. liegen im Belieben des Fachmannes.

Wie zuvor beschrieben, ist es für die vorgesehene Verschlüsselung bei dem Zentralsystem und der nachfolgenden Entschlüsselung des Zeitzeichens beim Netzwerkteilnehmer nötig, dass sowohl das Zentralsystem als auch der Netzwerkteilnehmer im Besitz desselben Schlüssels bzw. derselben Schlüssel sind. Da hier grundsätzlicher Art wiederum die Möglichkeit zur Manipulation besteht, nämlich dadurch, dass ein über längere Zeit verwendeter Schlüssel ausspioniert werden kann, ist es in einer bevorzugten Weiterbildung vorgesehen, dass sich wenigstens ein Schlüssel, der sowohl beim Zentralsystem als auch beim Netzwerkteilnehmer hinterlegt ist, synchron bei beiden Hinterlegungsstellen ändert, insbesondere nach vorgegebenen Zeitintervallen. Damit ist dieser Schlüssel jeweils immer bei beiden Hinterlegungsstellen zu gleichen Zeiten identisch vorhanden, ändert sich jedoch bevorzugt in kurzen Zeitintervallen von z.B. lediglich wenigen Sekunden, so dass die Möglichkeit zum Ausspionieren eines solchen Schlüssels nachhaltig herabgesetzt wird. Das erfindungsgemäße Verfahren wird dementsprechend mit einem zeitlich variablen Schlüssel ausgeführt, der beim Netzwerkteilnehmer und beim Zentralsystem identisch vorliegt. Von einem solchen Schlüssel können grundsätzlich auch mehrere vorliegen und in dem genannten Verfahren verwendet werden.

Die zeitlich synchrone Änderung dieses Schlüssels beim Netzwerkteilnehmer und beim Zentralsystem wird bevorzugt dadurch erreicht, dass sowohl beim Netzwerkteilnehmer als auch beim Zentralsystem je wenigstens ein Uhrsystem vorgesehen ist, wobei das Uhrsystem beim Netzwerkteilnehmer einem Uhrsystem beim Zentralsystem zugeordnet ist und beide Uhrsysteme wiederum ihrerseits einem konkreten Netzwerkteilnehmer zugeordnet sind. Diese beiden Uhrsysteme arbeiten zeitlich synchron und sind dafür vorgesehen einen zeitlich-sich ändernden Schlüssel beim Netzwerkteilnehmer und dem Zentralsystem wie zuvor beschrieben zu erzeugen, so dass dieser sich zeitlich synchron ändernde Schlüssel zur Verschlüsselung und Übertragung des Zeitsignales verwendet werden kann. Gegebenenfalls können auch mehrere Uhrsysteme eingesetzt werden, um mehrere Schlüssel zu erzeugen.

Hier kann es vorgesehen sein, dass die beiden Uhrsysteme hardwaremäßig ausgebildet sind und von dem insbesondere zertifizierten Zentralsystem nach der Anmeldung eines Netzwerkteilnehmers ausgegeben werden. Das Zentralsystem wird nach der Anmeldung eines Netzwerkteilnehmers zu dem erfindungsgemäßen Verfahren zwei Uhrsysteme zeitlich miteinander synchronisieren, eines bei sich behalten und eines dem Netzwerkteilnehmer z.B. käuflich oder als Leihgabe zur Verfügung stellen. Hierdurch ist die absolute Synchronität der beiden Uhrsysteme und die Identität des Schlüssels bei beiden Hinterlegungsstellen zu gleichen Zeiten gegeben.

Gemäß dem erfindungsgemäßen Verfahren wird es nötig sein, verschiedene Uhrsysteme, die entsprechend unterschiedlichen Netzwerkteilnehmern zugeordnet sind, untereinander zu unterscheiden. Hierfür ist es gemäß der Erfindung bevorzugt vorgesehen, dass das Zentralsystem bei der Abfrage eines Zeitsignales durch einen Netzwerkteilnehmer ein diesem zugeordnetes und beim Zentralsystem vorliegendes Uhrsystem anhand einer übermittelten Kennung ermittelt. Bei dieser Kennung kann es sich z.B. um eine solche handeln, die den Netzwerkteilnehmer innerhalb des Kommunikationsnetzwerkes eindeutig identifiziert. In beispielsweise kabelgebundenen Telefonnetzen kann es sich hierbei z.B. um die sogenannte Call-Line-Identity (CLI) handeln, in Mobilfunknetzen um das sogenannte Home Location Register (HLR), im Internet um die sogenannte IP-Adresse oder in anderen Systemen um eine Kennung umfassend PIN- und PAN-Nummern, die ebenfalls zur eindeutigen Identifizierung herangezogen werden können.

Die Eindeutigkeit ergibt sich im Wesentlichen schon dadurch, dass jede Zuordnung der Kennungen lediglich erst nach einer persönlichen Identifizierung des Besitzers z.B. durch einen Personalausweis herausgegeben wird. So beispielsweise die CLI bei der Anmeldung eines Telefonanschlusses, das HLR bei der Unterzeichnung eines Mobilfunkvertrages und die IP-Adresse im Internet bei der Registrierung bei einem Internetprovider, der selbst bei dynamischer Adressvergebung zumindest die providerinterne Kennung registriert.

Mittels einer solchen, von dem Netzwerkteilnehmer bei der Abfrage des Zeitsignales zur Verfügung gestellten Kennung ergibt sich dementsprechend die Möglichkeit beim Zentralsystem das diesem Netzwerkteilnehmer eindeutig zugeordnete Uhrsystem zu ermitteln, aus diesem Uhrsystem den erzeugten Schlüssel zur Verschlüsselung des Zeitsignales zu verwenden und anschließend das verschlüsselte Zeitsignal über das Telekommunikationsnetzvirerk an den Netzwerkteilnehmer zu versenden.

Alternativ kann es vorgesehen sein, das Zeitsignal unabhängig von einem durch ein Uhrsystem erzeugten Schlüssel lediglich alleine durch die zusätzlich zur Verfügung gestellte Kennung des Netzwerkteilnehmers zu verschlüsseln oder in einer Weiterbildung der Erfindung sowohl den durch das Uhrsystem erzeugten Schlüssel als auch die übermittelte Kennung gleichzeitig und/oder nacheinander zur Verschlüsselung heranzuziehen.

Das oben genannte Verfahren hat neben der Tatsache einer manipulationssicheren Zeitsignalübermittlung weiterhin den Vorteil, dass eine Ortsreferenz des Netzwerkteilnehmers gegeben ist, die sich durch die zur Verfügung gestellte Kennung, also beispielsweise die CLI, das HLR oder ähnliches ergibt. Diese Ortskennung oder aber auch weitere Identifikation des abfragenden Netzwerkteilnehmers trägt zu einer weiteren Erhöhung der Sicherheitsstufe bei, da schon alleine diese Kennungen schwer manipulierbar sind.

Nach einer Abfrage und Übermittlung des Zeitsignales von dem beschriebenen Zentralsystem liegt dementsprechend gemäß dem erfindungsgemäßen Verfahren bei dem Netzwerkteilnehmer ein manipulationsgesichertes, insbesondere zertifiziertes Zeitsignal vor, welches zur Zeitstempelung z.B. von Daten, die über das Telekommunikationsnetzwerk übermittelt werden sollen, herangezogen werden können. Ebenso ist das so erhaltene Zeitsignal für sämtliche Arten der Zeitstempelung einsetzbar, selbst wenn keine weitere Übermittlung der Daten vorgesehen ist.

So ist es beispielsweise möglich, dass ein Netzwerkteilnehmer in dem Augenblick, wo er über ein Telekommunikationsnetzwerk Daten von Seiten Dritter empfängt den zeitlichen Eingang dieser Daten durch einen Zeitstempel registriert, wobei der Zeitstempel gemäß dem oben beschriebenen Verfahren von einem Zentralsystem erhalten wird. Hierfür braucht der Netzwerkteilnehmer nach Erhalt der Daten lediglich bei dem zertifizierten Zentralsystem das Zeitsignal über das Netzwerk anfordern.

Ebenso kann es in einer Weiterbildung des oben genannten Verfahrens vorgesehen sein, dieses Verfahren auch zur Übermittlung von Daten mit einem manipulationssicheren Zeitstempel über ein Telekommunikationsnetzwerk von einem ersten Netzwerkteilnehmer zu einem zweiten Netzwerkteilnehmer heranzuziehen.

Dies kann bevorzugt dadurch erfolgen, dass die Daten, die von einem ersten Netzwerkteilnehmer zusammen mit einem Zeitsignal als Zeitstempel, welches gemäß dem zuvor beschriebenen Verfahren erhalten wird, an einen zweiten Netzwerkteilnehmer direkt oder indirekt über das Zentralsystem übermittelt werden.

So kann es nach dem Erhalt des Zeitsignales von dem Zentralsystem vorgesehen sein, dass die zu übermittelnden Daten und/oder das Zeitsignal bei der Übermittlung vom absendenden ersten Netzwerkteilnehmer verschlüsselt werden. Die Verschlüsselung kann sich gemäß der Erfindung sowohl auf die Daten oder das Zeitsignal alleine beschränken, als auch eine Verschlüsselung sowohl der Daten als auch des Zeitsignales gleichzeitig erfolgen. Besonders bevorzugt wird für die verschlüsselte Übermittlung der Daten an den zweiten Netzwerkteilnehmer der Schlüssel verwendet, der sowohl beim Netzwerkteilnehmer als auch beim Zentralsystem zeitlich synchron vorliegt. Alternativ wird eine Verschlüsselung mittels der Kennung des Netzwerkteilnehmers erfolgen bzw. in einer bevorzugten Ausführung eine Verschlüsselung mit beiden Möglichkeiten, also sowohl dem Schlüssel als auch der Kennung gleichzeitig oder nacheinander.

Erfindungsgemäß kann es vorgesehen sein, dass bei einer indirekten Übermittlung der Daten über das Zentralsystem das Zentralsystem die Daten an den zweiten empfangenden Netzwerkteilnehmer weiterleitet und dieser sicher sein kann, dass die Daten beim Zentralsystem zum zertifizierten Zeitpunkt angekommen sind. Dies kann als Zugangskontrolle der Daten eingesetzt werden, sofern der Netzwerkteilnehmer, der die Daten erhalten soll, sich dem Zentralsystem angeschlossen hat. Auch für diese Weiterleitung können sich Zentralsystem und der empfangende Teilnehmer des erfindungsgemäßen Verfahrens bedienen.

Alternativ ist es vorgesehen, dass ein zertifiziertes Zentralsystem direkt bei einem Netzwerkteilnehmer vorgesehen ist, wenn dieser Netzwerkteilnehmer den zeitlichen Zugang von Daten nachweisen muss. Dies kann z.B. regelmäßig bei Ämtern und Behörden der Fall sein, beispielsweise bei Patentämtern, wo der Eingang der Dokumente gemäß dem heutigen Stand der Technik in den Papierdokumenten durch eine Lochstempelung erfolgt. Eine elektronische Stempelung von elektronischen Dokumenten kann hingegen mit dem erfindungsgemäßen Verfahren durchgeführt werden. Ebenso ist der Einsatz bei Finanzämtern und anderen Behörden gegeben.

Bevorzugt wird sich eine entsprechende Behörde oder ein entsprechendes Amt, welches einen Nachweis über den zeitlichen Zugang von elektronischen Dokumenten führen muss, selbst eines zertifizierten Zentralsystemes bedienen und eine Zeitstempelung mit dem oben beschriebenen Verfahren zulassen.

Zur weiteren Absicherung kann es vorgesehen sein, dass das Zentralsystem eine Empfangsquittierung ausstellt, so dass der erste absendende Kommunikationsteilnehmer eine Rückmeldung darüber erhält, dass das Dokument mit seinem Zeitstempel beim Empfänger angekommen ist. Für die Empfangsquittung selbst kann beispielsweise wieder das Zeitsignal mit dem oben beschriebenen Verfahren übermittelt werden oder die Quittierung erfolgt über eine andere Art der Datenübertragung.

Mit dem oben beschriebenen Verfahren kann die Manipulationsfreiheit einer Dokumentensendung auf einfache Art und Weise überprüft werden, da beispielsweise nach der Übermittlung des Zeitsignales auf Anforderung eines ersten Telekommunikationsteilnehmers bei diesem Teilnehmer das manipulationsfreie, sicher übertragende Zeitsignal vorliegt, wobei dieses Zeitsignal den Absendezeitpunkt des Zeitstempels bei dem Zentralsystem repräsentiert.

Unter der Voraussetzung genügend kurzer Datenlaufzeiten wird der Netzwerkteilnehmer mit seinem synchron laufenden Uhrsystem im Idealfall denselben Schlüssel verwenden, um das übermittelte Zeitsignal wieder zu entschlüsseln. Sollte aufgrund einer zeitlichen Intervallüberschreitung das Uhrsystem beim Netzwerkteilnehmer bereits weiter gelaufen und einen nächsten Schlüssel generiert haben, wird der Netzwerkteünehmer mit seinem Verschlüsselungssystem feststellen, dass sich keine sinnvolle Zeit aus dem erhaltenen Datenpaket entschlüsseln lässt und gegebenenfalls auf einen bevorzugt abgespeicherten vorherigen Schlüssel des Uhrsystemes zurückgreifen. Sollte sich auch mit diesem vorherigen Schlüssel keine sinnvolle Zeit entschlüsseln lassen, so erfolgt ein weiterer Rückgriff auf den wiederum vorherigen Schlüssel und sofort, bis dass eine maximal tolerierbare Signallaufzeitüberschreitung festgestellt wird, welches den erhaltenen Zeitschlüssel als ungültig erscheinen lässt, so dass gegebenenfalls ein neuer Zeitschlüssel angefordert wird.

Bei einer erfolgreichen Decodierung des Zeitsignales wird dieses wie oben erwähnt z.B. zur Zeitstempelung empfangener Daten und/oder zur Versendung der Daten an einen Empfänger verwendet und durch den vom Uhrsystem neu generierten Schlüssel verschlüsselt und im folgenden an das Zentralsystem entweder eines Empfängers oder zur Weiterleitung an einen Empfänger übersandt, bei dem mit demselben zuvor beschriebenen Verfahren die Entschlüsselung innerhalb eines tolerierbaren Zeitintervalles erfolgt. Sollte die Entschlüsselung erfolglos sein, bedeutet dies, dass entweder an dem übermittelten Datenpaket eine Manipulation stattgefunden hat oder dass eine maximal tolerierbare Datenlaufzeit überschritten wurde.

Es kann somit mit dem erfindungsgemäßen Verfahren sichergestellt werden, dass zu übermittelnde Daten zu einem bestimmten Zeitpunkt abgesendet wurden, wobei dieser Zeitpunkt dem Zeitsignal entspricht, welches von dem Zentralsystem zur Verfügung gestellt wurde. Gegebenenfalls kann von dem Empfänger im Kommunikationsnetzwerk nach der Entschlüsselung des Absendezeitpunktes eine Datensendung als fristgemäß anerkannt werden, wenn eine eventuelle sehr lange Datenlaufzeit nicht in das Verschulden des Absenders fällt.

Die oben beschriebenen Verfahren können bevorzugt durch ein System zur Erzeugung eines manipulationssicheren Zeitstempels in netzwerkbasierten Kommunikationssystemen realisiert werden, bei dem das System ein Zentralsystem und je ein Uhrsystem auf Seiten eines Netzwerkteilnehmers und des Zentralsystemes umfasst, wobei die Uhrsysteme einander und einem Netzwerkteilnehmer zugeordnet sind und synchron arbeiten zur Erzeugung eines sich insbesondere in Zeitintervallen ändernden Schlüssels. Mittels dieses Schlüssels kann ein insbesondere amtlich anerkanntes Zeitsignal in dem Zentralsystem verschlüsselt und nach Übersendung an einen Netzwerkteilnehmer von diesem entschlüsselt werden, so dass diesem Netzwerkteilnehmer ein manipulationsgesicherter Zeitstempel zur Verfügung steht.

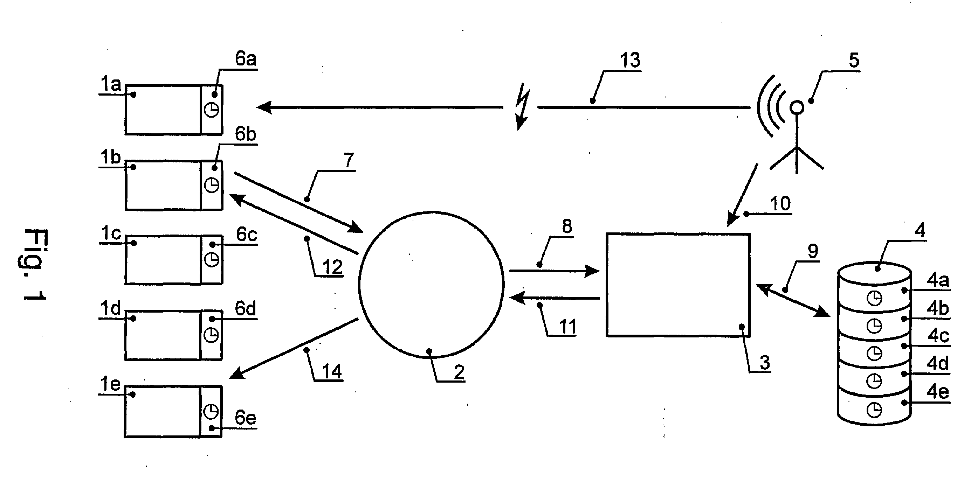

Ein Ausführungsbeispiel der Erfindung ist in der nachfolgenden Abbildung dargestellt. Die Figur 1 zeigt mehrere Netzwerkteilnehmer 1a - 1e, die über ein Telekommunikationsnetzwerk 2 untereinander in Verbindung stehen können. In Verbindung mit dem Telekommunikationsnetzwerk 2 ist weiterhin ein Zentralsystem 3 vorgesehen, welches ein manipulationssicheres Zeitsignal zur Verfügung stellen kann. Dieses manipulationssichere Zeitsignal basiert beispielsweise auf einem amtlich bzw. gesetzlich anerkannten Zeitzeichensender 5, wie z.B. in Deutschland dem DCF-77-Sender.

Grundsätzlich besteht die Möglichkeit, dass ein Telekommunikationsteilnehmer 1 a auf direktem Wege 13 das Zeitzeichensignal von dem Zeitzeichensender 5 empfängt. Dieses Zeitzeichensignal ist jedoch in keinem Falle manipulationssicher, da die Erzeugung dieses Signales leicht imitiert und so falsche Zeitzeichensignale erzeugt werden können. Auch kann das amtliche Zeitzeichen nicht in allen Regionen aufgrund von Abschattung der Radiowellen empfangen werden.

Gemäß der Erfindung ist es vorgesehen, dass ein Netzwerkteilnehmer 1b über eine Kommunikationsverbindung 7 und das Netzwerk 2 sowie die Kommunikationsverbindung 8 von einem am Netzwerk 2 angeschlossenen Zentralsystem 3 ein Zeitsignal 5/10 anfordert. Hierbei übermittelt der Teilnehmer 1 b automatisch eine Kennung z.B. bei einer Telefonverbindung oder über das Internet, wo sowohl die IP-Adresse als auch die kabelgebundene Telefonnummer oder Call-Line-Identity übertragen wird.

Über diese dem Zentralsystem 3 zur Verfügung gestellte Kennung kann das Zentralsystem aus einer Uhrsystem-Sammlung 4 gegbenenfalls mittels einer Datenbank das dem Netzwerkteilnehmer zugeordnete Uhrsystem 4b ermitteln und aus diesem Uhrsystem 4b einen Schlüssel auslesen, der zur Verschlüsselung des Zeitsignales, welches von dem Signalsender 5 über den Kommunikationsweg 10 zur Verfügung gestellt wird, herangezogen werden. Gegebenenfalls wird zur weiteren Verschlüsselung des Zeitsignales auch die Kennung des Netzwerkteilnehmers 1b verwendet.

Das Zentralsystem 3 sendet über den Kommunikationsweg 11, das Netzwerk 2 und den Kommunikationsweg 12 das verschlüsselte Zeitsignal an den Teilnehmer 1b, wobei dieser Teilnehmer nach Empfang des Signales mit dem von seinem eigenen Uhrsystem 6b erhaltenen synchronen Schlüssel das Zeitsignal entschlüsseln und weiter verwenden kann. Die weitere Verwendung liegt beispielsweise in einer Zeitstempelung von Daten, die der Teilnehmer anderweitig empfangen hat oder versenden möchte.

Gegenüber dem alternativen Kommunikationsweg 13, nämlich dem direkten Empfang des Zeitzeichens hat der beschriebene Weg zum Empfang des Zeitsignales den Vorteil einer wesentlich höheren Manipulationssicherheit, da bereits außerhalb des reinen Transportbereiches über das Telekommunikationsnetzwerk 2 die Verschlüsselung und Entschlüsselung des Zeitsignales erfolgt. Es kann hier gegenüber dem oben benannten Stand der Technik dementsprechend eine eindeutige Trennung zwischen Verarbeitung und Verschlüsselung der Daten und Transport der Daten durch einen Netzbetreiber erfolgen.

Mit dem so erhaltenen Zeitsignal kann der Teilnehmer 1b entweder von einem Dritten erhaltene Daten stempeln und ablegen oder seinerseits das Zeitsignal an zu versendende Daten anfügen und erneut mit dem Schlüssel seines eigenen Uhrsystemes 6b verschlüsseln und dem Zentralsystem 3 zusenden, welches bei einem Empfänger installiert ist oder die Daten z.B. an einen ebenfalls dem Verfahren angeschlossenen Netzwerkteilnehmer 1e über die Kommunikationsverbindung 11, das Netz 2 und die Verbindung 14 zusenden.

Das Zentralsystem 3 muss für einen manipulationssicheren Transport des Zeitsignales seinerseits lediglich dafür Sorge tragen, dass es selbst das Zeitsignal, z.B. von einem amtlich anerkannten Sender, z.B. DCF-77, unverfälscht erhält. Dies kann bevorzugt dann der Fall sein, wenn der Zeitzeichensignalgeber, beispielsweise der DCF-77-Sender, seinerseits die Aufgabe des zertifizierten Zentralsystemes übernimmt, so dass praktisch keine Kommunikationswege für ein unverschlüsseltes Zeitsignal existieren.

Andererseits ist es möglich, dass jegliches Amt oder Behörde, welches einen zeitlichen Empfang quittieren muss, sich auf ein internes Uhrsignal zurückzieht und dieses Uhrsignal Telekommunikationsteilnehmern als zumindest amtsintern anerkannte Referenz zusendet.

### Bezugszeichenliste

- 1a-1e: Netzwerkteilnehmer
- 2: Telekommunikationsnetzwerk
- 3: Zentralsystem
- 4: Uhrsystem-Sammlung
- 4a - 4e: Uhrsysteme
- 5: Zeitsignal
- 6a - 6e: Uhrsysteme
- 7 - 14: Kommunikationsverbindungen/ Kommunikationswege

## Patentansprüche

1. Verfahren zur Bereitstellung eines Zeitstempels durch ein manipütationssicheres Zeitsignal (5, 10) über ein Telekommunikationsnetzwerk (2), wobei ein Netzwerkteilnehmer (1a; 1b; ..., 1e) von einem Zentralsystem (3) ein amtlich anerkanntes Zeitsignal (5, 10) anfordert, welches vom Zentralsystem (3) mit wenigstens einem Schlüssel verschlüsselt wird, nach der Verschlüsselung über das Telekommunikationsnetzwerk (2) an den Netzwerkteilnehmer (1a, 1b,..., 1e) übermittelt und von diesem entschlüsselt wird, **dadurch gekennzeichnet, dass** Verschlüsselung und Entschlüsselung mit demselben/denselben Schlüssel/n erfolgt, wofür beim Netzwerkteilnehmer (1a, 1b,..., 1e) und beim zertifizierten Zentralsystem (3) je wenigstens ein Uhrsystem (4a, 4b, ..., 4e, 6a, 6b ,..., 6e) vorgesehen ist, wobei je zwei Uhrsysteme (4a - 6a, 4b - 6b, ..., 4e - 6e) einander und dem Netzwerkteilnehrner (1a, 1b, ..., 1e) zugeordnet sind und synchron arbeiten zur Erzeugung eines sich zeitlich synchron ändernden Schlüssels.

2. Verfahren nach einem der vorherigen Ansprüche, **dadurch gekennzeichnet, dass** das Zentralsystem (3) bei der Abfrage eines Zeitsignales (5,10) durch einen Netzwerkteilnehmer (1a, 1b, ..., 1e) ein diesem zugeordnetes Uhrsystem (4a, 4b, ..., 4e) anhand einer übermittelten Kennung, insbesondere der Netzwerkadresse des Netzwerkteilnehmers (1a, 1b, ..., 1e), ermittelt und mittels einem von dem zugeordneten Uhrsystem (4a, 4b, ..., 4e) erzeugten Schlüssel und/oder der Kennung das Zeitsignal (5,10) verschlüsselt und übersendet.

3. Verfahren nach einem der verherigen Ansprüche, **dadurch gekennzeichnet, dass** ein Zentralsystem (3) beim zweiten Netzwerkteilnehmer vorgesehen ist,

4. Verfahren nach einem der vorherigen Ansprüche, **dadurch gekennzeichnet, dass** das Zentralsystem (3) eine Empfangsquittierung, insbesondere mit einem Zeitsignal (5,10) an den ersten Netzwerkteilnehmer (1a, 1b, ..., 1e) zurücksendet.

5. Verwendung eines Verfahrens nach einem der vorherigen Ansprüche-zur Übermittlung. von Daten mit einem manipulationssicheren Zeitstempel über ein Telekommünikationsnetzwerk (2) von einem ersten Netzwerkteilnehmer zu einem zweiten Netzwerkteilnehmer **dadurch gekennzeichnet, dass** die Daten von dem ersten Netzwerkteilnehmer zusammen mit einem Zeitsignal an den zweiten Netzwerkteilnehmer direkt oder indirekt über das Zentralsystem (3) übermittelt werden.

6. Verwendung nach Anspruch 6, **dadurch gekennzeichnet, dass** die Daten und/oder das Zeitsignal bei der Übermittlung vom ersten Netzwerkteilnehmer (1a, 1b, ..., 1e) verschlüsselt werden, insbesondere mit dem beim Zentralsystem (3) und ersten Netzwerkteilnehmer (1a, 1b,..., 1e) vorliegenden Schlüssel und/oder einer Kennung des ersten Netzwerkteilnehmers (1a, 1b, ..., 1e).

7. System zur Erzeugung eines manipulationssicheren Zeitstempels in netzwerkbasierten Kommunikationssystemen **dadurch gekennzeichnet, dass** es ein Zentralsystem (3) und wenigstens je ein Uhrsystem (4a, 4b, ..., 4e, 6a, 6b,..., 6e) auf seiten eines Netzwerkteilnehmers (1a, 1b, ...,1e) und des Zentralsystems (3) umfasst, wobei je zwei Uhrsysteme (4a - 6a, 4b - 6b,..., 4e -6e) einander und dem Netzwerkteilnehmer (1 a, 1b, ..., 1e) zugeordnet sind und synchron arbeiten zur Erzeugung eines sich in Zeitintervallen. ändernden Schlüssels mittels dem ein amtlich anerkanntes Zeitsignal (5,10). im Zentralsystem (3) verschlüsselbar und nach Übersendung an den Netzwerkteilnehmer (1a, 1 b, ..., 1e) von diesem entschlüsselbar ist.

8. System nach Anspruch 7, **dadurch gekennzeichnet, dass** ein Zeitzeichensender (5) das Zentralsystem (3) bildet.

## Claims

1. Method for providing a time stamp by means of a tamperproof time signal (5, 10) over a telecommunications network (2), wherein a network subscriber (1a, 1b, ..., 1e) requests an officially recognized time signal (5, 10) from a central system (3), said time signal being encrypted by the central system (3) with at least one key and then after encryption being transmitted over the telecommunications network (2) to the network subscriber (1a, 1b, ..., 1e) and being decrypted by said subscriber, **characterized in that** encryption and decryption take place using the same key(s), for which purpose at least one clock system (4a, 4b, ..., 4e, 6a, 6b, ..., 6e) each is provided at the network subscriber (1a, 1b, ..., 1e) and at the certified central system (3), each pair of clock systems (4a - 6a, 4b - 6b, ..., 4e - 6e) being assigned to one another and to the network subscriber (1a, 1b, ..., 1e) and operating synchronously to generate a key that changes synchronously over time.

2. Method according to any one of the preceding claims, **characterized in that**, at the request by a network subscriber (1a, 1b, ..., 1e) for a time signal (5, 10), the central system (3) identifies a clock system (4a, 4b, ..., 4e ) assigned to said subscriber by means of a transmitted identifier, in particular the network address of the network subscriber (1a, 1b, ..., 1e), and encrypts and transmits the time signal (5, 10) using a key generated by the assigned clock system (4a, 4b, ..., 4e) and/or by the identifier.

3. Method according to any one of the preceding claims, **characterized in that** a central system (3) is provided at the second network subscriber.

4. Method according to any one of the preceding claims, **characterized in that** the central system (3) returns an acknowledgment of receipt, in particular with a time signal (5, 10), to the first network subscriber (1a, 1b, ..., 1e).

5. Use of a method according to any one of the preceding claims for transmission of data with a tamperproof time signal over a telecommunications network (2) from a first network subscriber to a second network subscriber, **characterized in that** the data, together with a time signal, are transmitted from the first network subscriber directly or indirectly through the central system (3) to the second network subscriber.

6. Use according to claim 6 [sic], **characterized in that** the data and/or the time signal are encrypted at transmission from the first network subscriber (1a, 1b, ..., 1e), in particular with the key present at the central system (3) and at the first network subscriber (1a, 1b, ..., 1e) and/or with an identifier of the first network subscriber (1a, 1b, ..., 1e).

7. System for generating a tamperproof time stamp in network-based communications systems, **characterized in that** it comprises a central system (3) and at least one clock system (4a, 4b, ..., 4e, 6a, 6b, ..., 6e) each at a network subscriber (1a, 1b, ..., 1e) and at the central system (3), each pair of clock systems (4a - 6a, 4b - 6b, ..., 4e - 6e) being assigned to one another and to the network subscriber (1a, 1b, ..., 1e) and operating synchronously to generate a key that changes at time intervals, by means of which key an officially recognized time signal (5, 10) can be encrypted in the central system (3) and, after having been transmitted to the network subscriber (1a, 1b, ..., 1e), can be decrypted by said subscriber.

8. System according to claim 7, **characterized in that** a time signal transmitter (5) constitutes the central system (3).

## Revendications

1. Procédé pour fournir un horodateur par un signal horaire (5, 10) protégé contre des manipulations via un réseau de télécommunications (2), dans lequel un abonné de réseau (1a, 1b, ..., 1e) demande à un système central (3) un signal horaire (5, 10) reconnu officiellement qui est crypté par le système central (3) avec au moins une clé, est transmise après le cryptage via le réseau de télécommunications (2) à l'abonné de réseau (1a, 1b, ...1e) et est décrypté par celui-ci, **caractérisé en ce que** cryptage et décryptage sont effectués avec le(s) même(s) clé(s), ce pour quoi au moins un système d'horlogerie (4a, 4b, ..., 4e, 6a, 6b, ... 6e) est prévu chez l'abonné de réseau (1a, 1b, ... 1e) et au système central certifié (3), deux systèmes d'horlogerie (4a à 6a, 4b à 6b, ..., 4e à 6e) étant associés entre eux et à l'abonné de réseau (1a, 1b, ..., 1e) et fonctionnant de manière synchrone pour générer une clé variant de manière synchrone dans le temps.

2. Procédé selon l'une des revendications précédentes, **caractérisé en ce que** le système central (3), lors de la demande d'un signal horaire (5, 10) par un abonné de réseau (1a, 1b,..., 1e), détermine un système d'horlogerie associé à celui-ci (4a, 4b, ..., 4e) à l'aide d'une identification communiquée, en particulier de l'adresse de réseau de l'abonné de réseau (1a, 1b,..., 1e), et crypte et envoie le signal horaire (5, 10) au moyen d'une clé générée par le système d'horlogerie associé (4a, 4b, ..., 4e) et/ou de l'identification.

3. Procédé selon l'une des revendications précédentes, **caractérisé en ce qu'**un système central (3) est prévu chez le deuxième abonné de réseau.

4. Procédé selon l'une des revendications précédentes, **caractérisé en ce que** le système central (3) retourne au premier abonné de réseau (1a, 1b, ..., 1e) un accusé de réception, en particulier avec un signal horaire (5, 10).

5. Utilisation d'un procédé selon l'une des revendications précédentes pour transmettre des données avec un horodateur protégé contre des manipulations depuis un premier abonné de réseau à un deuxième abonné de réseau via un réseau de télécommunications (2), **caractérisée en ce que** les données du premier abonné de réseau sont transmises avec un signal horaire au deuxième abonné de réseau directement ou indirectement par l'intermédiaire du système central (3).

6. Procédé selon la revendication 6, **caractérisé en ce que** les données et/ou le signal horaire sont cryptés lors de la transmission par le premier abonné de réseau (1a, 1b, ..., 1e), en particulier avec la clé présente au système central (3) et chez le premier abonné de réseau (1a, 1b, ..., 1e) et/ou avec une identification du premier abonné de réseau (1a, 1b, ...,1e).

7. Système pour générer un horodateur protégé contre des manipulations dans des systèmes de communication basés sur des réseaux, **caractérisé en ce qu'**il comprend un système central (3) et au moins un système d'horlogerie (4a, 4b, ..., 4e, 6a, 6b, ..., 6e) du côté d'un abonné de réseau (1a, 1b, ..., 1e) aussi bien que du système central (3), chaque paire de systèmes d'horlogerie (4a à 6a, 4b à 6b, ..., 4e à 6e) étant associés entre eux et à l'abonné de réseau (1a, 1b, ..., 1e) et fonctionnant de manière synchrone pour générer une clé variant dans des intervalles de temps, au moyen duquel un signal horaire reconnu officiellement (5, 10) peut être crypté dans le système central (3) et décrypte après l'envoi à l'abonné de réseau (1a, 1b, ..., 1e) par celui-ci.

8. Système selon la revendication 7, **caractérisé en ce qu'**un émetteur de signaux horaires (5) forme le système central (3).
